# EUROPÄISCHE PATENTSCHRIFT

(11) **EP 1 216 787 B1**
(45) Veröffentlichungstag und Bekanntmachung des Hinweises auf die Patenterteilung: **18.08.2004**
(21) Anmeldenummer: 00811228.6
(22) Anmeldetag: 21.12.2000
(51) Int. Cl.: B23Q 1/48, B23Q 1/54, F16H 21/02

(54) **Positioniervorrichtung**
Positioning device
Dispositif de positionnement

(43) Veröffentlichungstag der Anmeldung: 26.06.2002
(73) Patentinhaber: Liechti Engineering AG, 3550 Langnau (CH)
(72) Erfinder: Scheidegger, Andreas, 3510 Konolfingen (CH); Liechti, Ralph, 3550 Langnau i.E. (CH)
(74) Vertreter: BOVARD AG - Patentanwälte

(56) Entgegenhaltungen:
- WO-A-99/38646
- DE-C- 19 540 303
- FR-A- 2 770 432
- US-A- 3 232 141
- PATENT ABSTRACTS OF JAPAN vol. 1996, no. 08, 30. August 1996 (1996-08-30) -& JP 08 099243 A (HIIHAISUTO SEIKO KK), 16. April 1996 (1996-04-16)
- KRAUSE W ET AL: "POSITIONIEREN IM EIN-EBENEN-PRINZIP" FEINWERKTECHNIK + MESSTECHNIK,DE,CARL HANSER VERLAG. MUNCHEN., Bd. 99, Nr. 7 / 08, 1. August 1991 (1991-08-01), Seiten 306-307, XP000259669

## Beschreibung

Die Erfindung betrifft eine Positioniervorrichtung, bei der ein Körper mittels dreier Antriebe in einer Ebene verschiebbar und drehbar ist.

Es sind verschiedene Positioniervorrichtungen bekannt, bei denen ein Körper mittels dreier Antriebe in einer Ebene verschiebbar und drehbar ist, siehe, zum Beispiel JP08099243. Diese bekannten Vorrichtungen haben den Nachteil, dass zumindest einer der Antriebe zusammen mit dem Körper verschoben wird, wodurch diese Vorrichtungen relativ schwer und träge sind.

Der Erfindung liegt die Aufgabe zugrunde, eine Positioniervorrichtung vorzuschlagen, die einfach aufgebaut ist und bei der die bewegten Massen möglichst klein sind.

Diese Aufgabe wird gemäss der Erfindung dadurch gelöst, dass mit dem Körper drei längliche, nicht parallele Führungselemente starr verbunden sind, dass jedes Führungselement in einem Translationslager längsverschiebbar aufgenommen ist, dass jedes Translationslager um eine senkrecht zur Ebene gerichtete Schwenkachse schwenkbar ist, dass jede Schwenkachse auf einem Rotor im Abstand von dessen Rotationsachse und parallel zu dieser Rotationsachse angeordnet ist und dass die drei Rotoren achsparallel angeordnet und durch die Antriebe drehbar sind.

Diese Bauweise hat den Vorteil, dass sie einfach aufgebaut ist und dass insbesondere keiner der Antriebe von einem anderen Antrieb mit bewegt werden muss.

Nach einer bevorzugten Ausführungsart der Erfindung sind die drei Rotoren konzentrisch angeordnet, wodurch die Positioniervorrichtung besonders einfach gebaut werden kann.

Wenn nach einer weiteren besonderen Ausführungsart der Erfindung der Abstand von der Rotorachse zur Schwenkachse bei allen drei Rotoren gleich ist, bewegen sich alle drei Schwenkachsen auf der selben Kreisbahn, wodurch die Steuerung der Positioniervorrichtung einfacher ausgeführt werden kann.

Die Führungselemente sind vorzugsweise gerade ausgebildet und in einem gegenseitigen Winkelabstand von 120 Grad am Körper angeordnet. Auch diese Massnahme vereinfacht die Steuerung der Positioniervorrichtung.

Wenn nach einer weiteren bevorzugten Ausführungsart der Erfindung die Antriebe Motoren sind, wobei jeder Motor über ein Getriebe mit einem der Rotoren verbunden ist, können zur Realisierung der Positioniervorrichtung handelsübliche Motoren verwendet werden.

Nach einer besonders bevorzugten Ausführungsart der Erfindung sind die Antriebe Elektromotoren, die einen gemeinsamen Stator aufweisen und an jedem der Rotoren sind Mittel vorhanden, die mit entsprechenden, am Stator angeordneten Mitteln elektromagnetisch zusammenwirken. Auf diese Weise lassen sich Teile einsparen, was zu einer besonders leichten und schnell reagierenden Positionierungsvorrichtung führt.

Im folgenden werden eine konventionelle Positionierungsvorrichtung und besondere Ausführungsbeispiele der erfindungsgemässen Positionierungsvorrichtung unter Bezugnahme auf die beiliegenden Zeichnungen beispielsweise näher erläutert. Es zeigt:
- Figur 1: eine schematische, perspektivische Darstellung einer Positionierungsvorrichtung nach dem Stand der Technik,
- Figur 2: eine schematische, perspektivische Darstellung eines Ausführungsbeispiels der Erfindung,
- Figuren 3 bis 5: einen schematischen Grundriss der Positioniervorrichtung nach Figur 2 in drei verschiedenen Positionen,
- Figur 6: einen Längsschnitt durch ein Ausführungsbeispiel der erfindungsgemässen Positioniervorrichtung,
- Figur 7: einen Grundriss der Positioniervorrichtung, wobei der Körper und die Linearlager abgenommen sind, und
- Figuren 8 bis 10: Längsschnitte entlang den in Figur 7 eingezeichneten Linien VIII - VIII, IX - IX und X - X durch ein weiteres Ausführungsbeispiel der erfindungsgemässen Positioniervorrichtung.

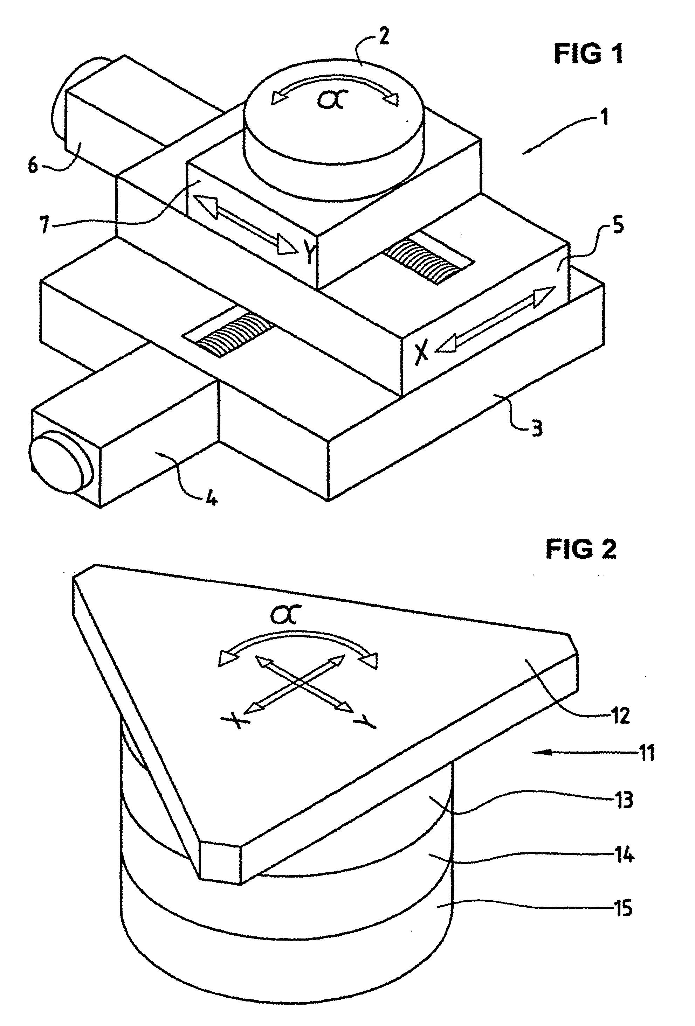

Bei der in Figur 1 schematisch dargestellten konventionellen Positioniervorrichtung 1 ist ein Körper 2 in einer Ebene verschiebbar und drehbar angeordnet. Der Körper 2 kann beispielsweise ein zur Aufnahme eines zu bearbeitenden Werkstückes dienender Tisch sein oder eine Spannvorrichtung für ein Werkzeug. An einer Basis 3 ist ein erster Antrieb 4 angeordnet, mit dem auf der Basis 3 ein Schlitten 5 in einer ersten Richtung X verschiebbar ist. Am Schlitten 5 ist ein zweiter Antrieb 6 angeordnet, mit dem ein auf dem ersten Schlitten 5 geführter zweiter Schlitten 7 in einer zur ersten Richtung X rechtwinklig verlaufenden Richtung Y bewegbar ist. Der zweite Schlitten 7 trägt einen nicht dargestellten Drehantrieb, mit welchem der Körper 2 um seine senkrecht zur Ebene X - Y gerichtete Achse in Richtung des Doppelpfeils α drehbar ist. Wenn somit der Körper 2 in der Y-Richtung verschoben werden soll, muss der Antrieb 6 mit dem Körper 2 auch dessen Drehantrieb und den Schlitten 7 bewegen. Soll der Körper 2 in der X-Richtung verschoben werden, muss der Antrieb 4 mit dem Körper 2 auch dessen Drehantrieb, den Schlitten 7 und den Schlitten 5 bewegen. Alle diese zu bewegenden Massen stellen insbesondere für schnelle Bewegungen des Körpers 2 ein grosses Hindernis dar und die Antriebe 6 und 4 müssen stark dimensioniert werden.

Fig. 2 zeigt in einer stark vereinfachten perspektivischen Ansicht eine Ausführungsart der erfindungsgemässen Positioniervorrichtung, welche hier als Ganzes mit 11 bezeichnet ist. Der zu verstellende Körper 12, der beispielsweise als Tisch ausgebildet sein kann und eine (nicht dargestellte) Spannvorrichtung für ein Werkstück oder ein Werkzeug aufweisen kann, ist in diesem Fall dreieckig mit gebrochenen Ecken dargestellt. Er könnte aber selbstverständlich eine beliebige andere Form aufweisen. Drei Rotoren 13, 14 und 15, deren Funktion weiter unten erläutert wird, sind konzentrisch unter dem Körper 2 angeordnet.

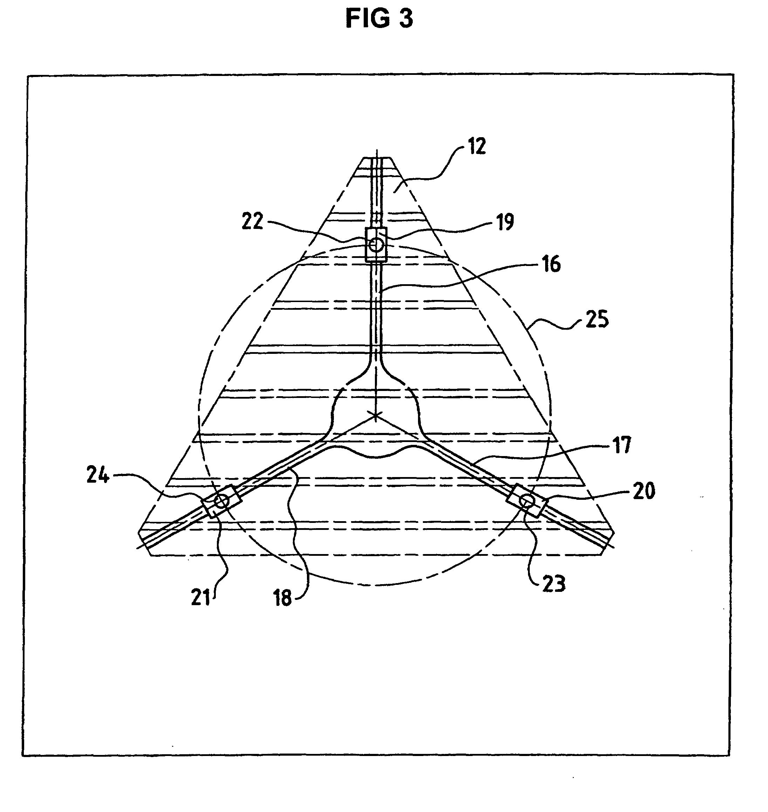

Anhand der Figuren 3 bis 5 wird nun die Funktionsweise der erfindungsgemässen Positioniervorrichtung erläutert. Der Körper 12 ist auf diesen Figuren nur strichpunktiert dargestellt. Drei Führungen 16, 17 und 18 sind unter dem Körper 12 sternförmig angeordnet und mit dem Körper 12 fest verbunden. Jede der Führungen 16, 17 und 18 ist in einem Linearlager 19, 20 und 21 aufgenommen, welche ihrerseits über je ein Schwenklager von jeweils einem der Rotoren 13, 14 und 15 getragen werden. Jedes der Schwenklager weist eine senkrecht zur Ebene X - Y gerichtete Achse 22, 23 und 24 auf, welche durch einen der Rotoren 13, 14 und 15 getragen wird und unabhängig auf einer gemeinsamen Kreisbahn 25 bewegbar ist. Figur 3 zeigt eine Position des Körpers 12, in der die drei Linearlager unter sich auf der Kreisbahn 25 gleiche Winkelabstände von jeweils 120° aufweisen. In dieser Position befindet sich der Körper 12 im Zentrum des Flächenbereiches, in dem er verschoben werden kann.

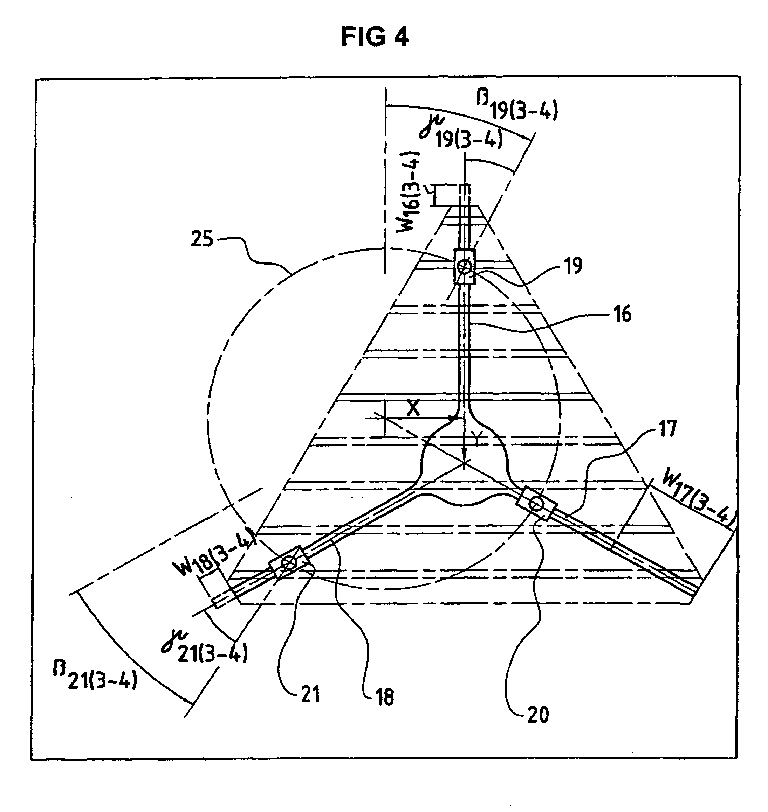

Figur 4 zeigt eine Position des Körpers 12, in welcher dieser gegenüber der in Figur 3 dargestellten Position parallel verschoben wurde. Dies wurde erreicht, indem das Linearlager 19 auf der Kreisbahn 25 um den Winkel β₁₉₍₃₋₄₎ im Uhrzeigersinn und das Linearlager 21 um den Winkel β₂₁₍₃₋₄₎ entgegen dem Uhrzeigersinn verschoben wurden, während das Linearlager 20 seinen Platz gemäss Figur 3 beibehielt. Dabei verschoben sich die Führungen 16, 17 und 18 relativ zu den Linearlagern, wie dies durch die Pfeile W₁₆₍₃₋₄₎, W₁₇₍₃₋₄₎ und W₁₈₍₃₋₄₎ gezeigt ist und die Linearlager 19 und 21 verschwenkten sich um ihre Achsen um die Winkel γ₁₉₍₃₋₄₎ und γ₂₁₍₃₋₄₎. Als Resultat verschob sich der Körper 12 um den Betrag X in der Zeichnungsebene nach rechts und um den Betrag Y nach unten.

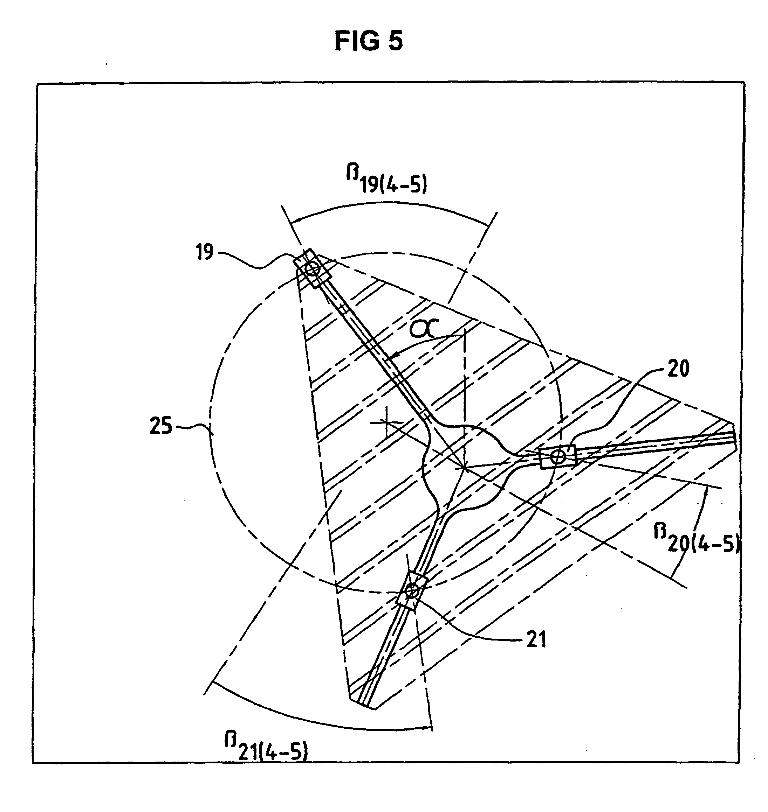

Figur 5 zeigt eine Position des Körpers 12, in welcher dieser gegenüber der in Figur 4 dargestellten Position um den Winkel α gedreht wurde, während sein Zentrum genau an der selben Stelle wie in Figur 4 blieb. Dies wurde erreicht, indem, ausgehend von der Position gemäss Figur 4, alle drei Linearlager entgegen dem Uhrzeigersinn um unterschiedliche Winkelbeträge, nämlich β₁₉₍₄₋₅₎, β₂₀₍₄₋₅₎ und β₂₁₍₄₋₅₎ auf der Kreisbahn 25 verschoben wurden.

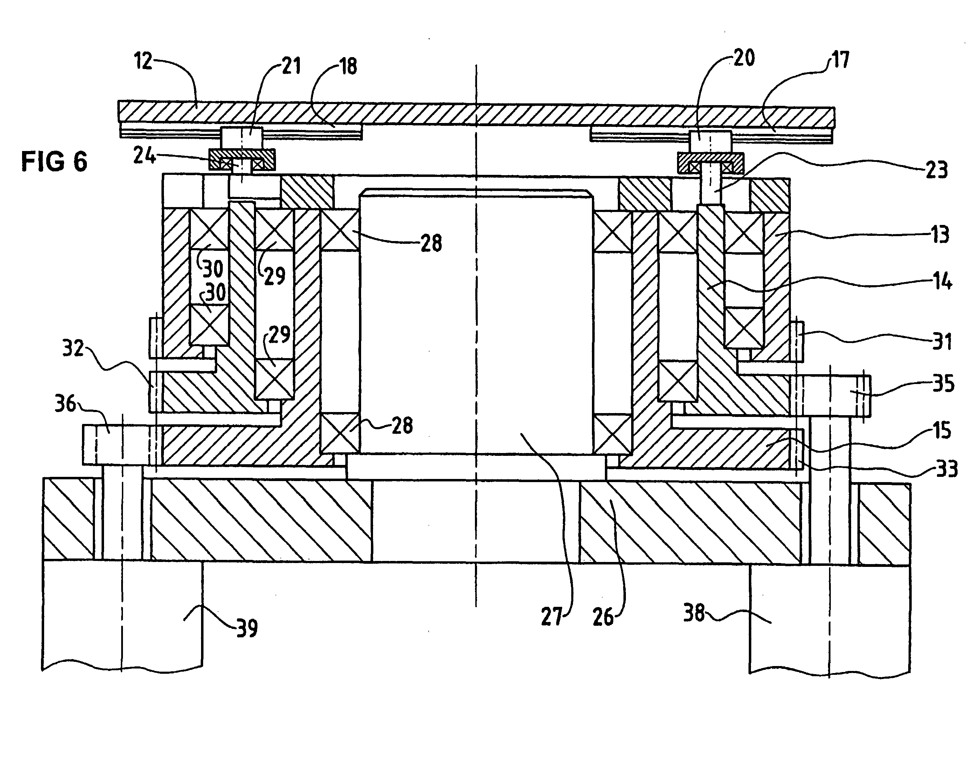

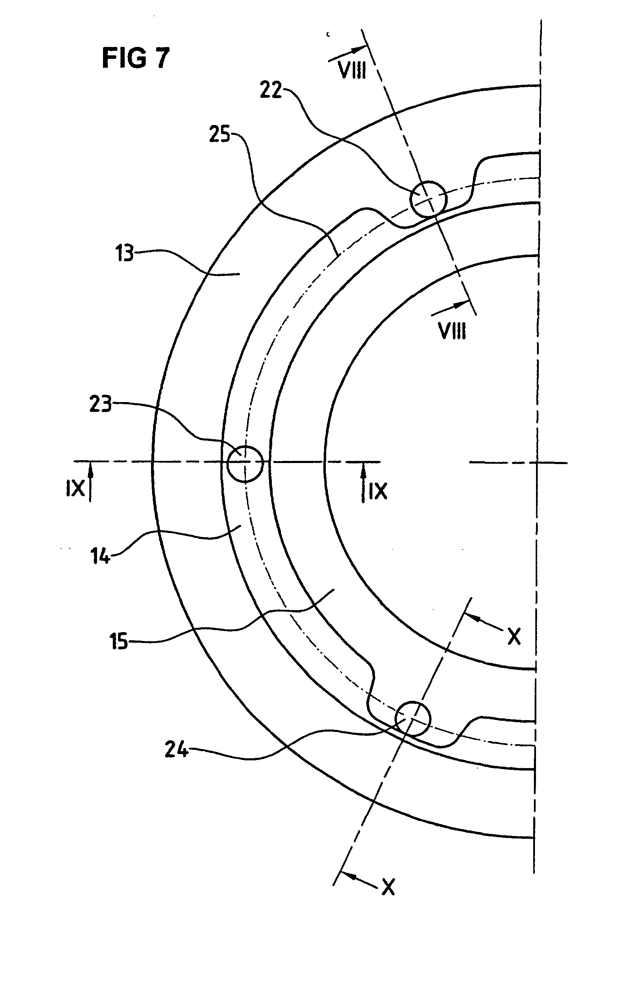

Figur 6 zeigt einen Längsschnitt durch ein Ausführungsbeispiel der Positioniervorrichtung. Auf einer Basisplatte 26 ist eine zentrale Welle 27 angeordnet, welche die drei Rotoren 13, 14 und 15 in konzentrischer Anordnung trägt. Erste Lager 28 stützen den Rotor 15 drehbar an der Welle 27 ab, zweite Lager 29 stützen den Rotor 14 drehbar am Rotor 15 ab und dritte Lager 30 stützen den Rotor 13 drehbar am Rotor 14 ab, so dass jeder Rotor unabhängig drehbar ist. Zahnkränze 31, 32 und 33 sind unten an jedem Rotor vorgesehen, wobei mit jedem dieser Zahnkränze ein Ritzel kämmt, von denen aber in der Schnittdarstellung nach Figur 6 nur zwei, nämlich die Ritzel 35 und 36 sichtbar sind. Jedes Ritzel ist mit einem unabhängigen Motor 38, 39 verbunden. Auf der oberen Seite jedes Rotors ist eine der drei Schwenkachsen 22, 23 und 24 für die Linearlager angeordnet. In Figur 6 sind nur die Schwenkachsen 23 und 24 sichtbar. Ebenfalls sind in der Schnittansicht der Figur 6 nur die entsprechenden, am Tisch 12 befestigten Führungen 17 und 18 sichtbar. Figur 7 zeigt in einem Grundriss, wie die Schwenkachsen 22, 23 und 24 mit den Rotoren 13, 14 und 15 verbunden sind.

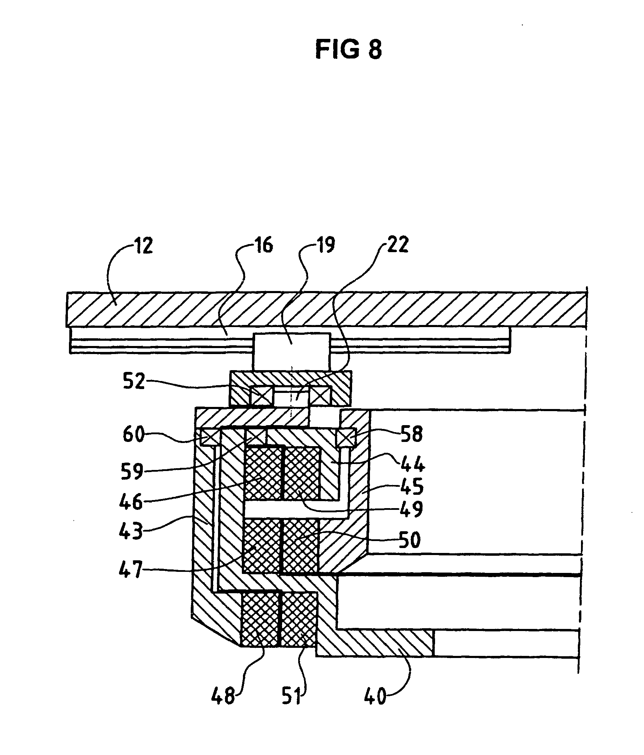

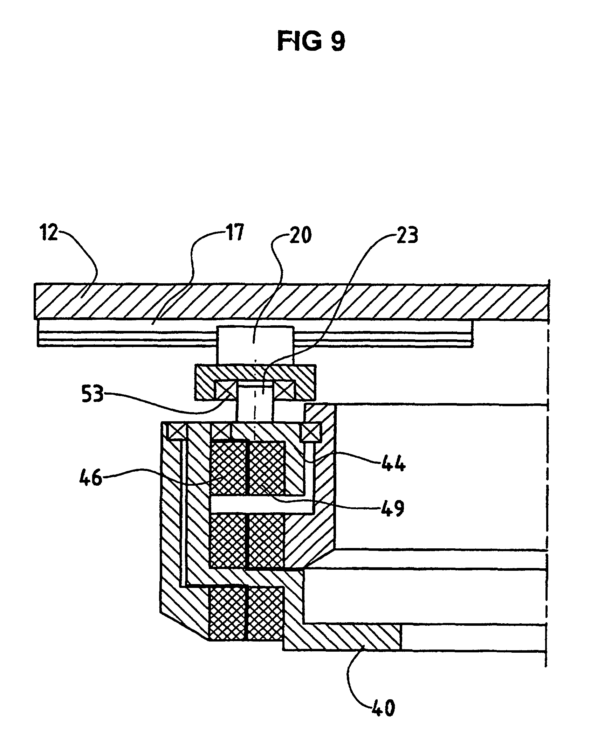

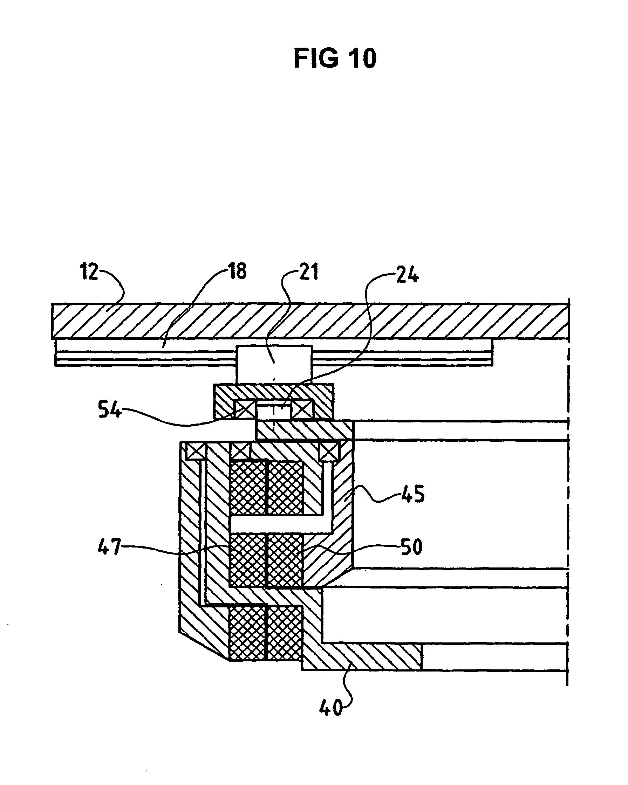

In den Figuren 8 bis 10 ist eine andere Ausführungsart der erfindungsgemässen Positioniervorrichtung dargestellt, wobei jede Figur jeweils die Hälfte der Vorrichtung in einem Längsschnitt zeigt. Figur 8 zeigt einen Schnitt entlang der Linie VIII - VIII in Figur 7, Figur 9 zeigt einen Schnitt entlang der Linie IX - IX in Figur 7 und Fig. 10 zeigt einen Schnitt entlang der Linie X - X in Figur 7. Bei dieser Ausführungsart ist ein Stator 40 vorgesehen, an dem die Rotoren 43, 44 und 45 mit Lagern 58, 59 und 60 drehbar abgestützt sind. Die Motoren für den Antrieb der drei Rotoren sind bei dieser Ausführungsart integriert, indem der Stator 40 drei Statorwicklungen 46, 47 und 51 trägt, die mit Rotorwicklungen 49, 50 und 48 zusammenwirken, welche an den Rotoren 43, 44 und 45 vorgesehen sind. Anstelle der Statorwicklungen oder bevorzugt anstelle der Rotorwicklungen können auch Dauermagnete vorgesehen sein. Jeder dieser drei in die Vorrichtung integrierten Motoren kann dabei beispielsweise so gestaltet sein, dass er nach Art eines Schrittmotors betrieben werden kann. Mit einer entsprechenden Steuerung können diese Motoren so angesteuert werden, dass der Körper 12 sehr genau positioniert werden kann. Da jeder Rotor unabhängig von den anderen Rotoren bewegbar ist, sind die im Betrieb zu beschleunigenden Massen im Vergleich mit Positioniervorrichtungen nach dem Stand der Technik gering und die Bewegungen der Positioniervorrichtung können folglich sehr schnell und exakt erfolgen.

## Patentansprüche

1. Positioniervorrichtung (11), bei der ein Körper (12) mittels dreier Antriebe (38, 39; 46 - 51) in einer Ebene (X - Y) verschiebbar und drehbar ist, **dadurch gekennzeichnet, dass** mit dem Körper (12) drei längliche, nicht parallele Führungselemente (16, 17, 18) starr verbunden sind, dass jedes Führungselement (16, 17, 18) in einem Translationslager (19, 20, 21) längsverschiebbar aufgenommen ist, dass jedes Translationslager (19, 20, 21) um eine senkrecht zur Ebene gerichtete Schwenkachse (22, 23, 24) schwenkbar ist, dass jede Schwenkachse (22, 23, 24) auf einem Rotor (13, 14, 15; 43, 44, 45) im Abstand von dessen Rotationsachse und parallel zu dieser Rotationsachse angeordnet ist und dass die drei Rotoren (13, 14, 15; 43, 44, 45) achsparallel angeordnet und durch die Antriebe (38, 39; 46 - 51) drehbar sind.

2. Positioniervorrichtung nach Anspruch 1, **dadurch gekennzeichnet, dass** die drei Rotoren (13, 14, 15; 43, 44, 45) konzentrisch angeordnet sind.

3. Positioniervorrichtung nach einem der vorangehenden Ansprüche, **dadurch gekennzeichnet, dass** der Abstand von der Rotorachse zur Schwenkachse (22, 23, 24) bei allen drei Rotoren (13, 14, 15; 43, 44, 45) gleich ist.

4. Positioniervorrichtung nach einem der vorangehenden Ansprüche, **dadurch gekennzeichnet, dass** die Führungselemente (16, 17, 18) gerade sind.

5. Positioniervorrichtung nach Anspruch 4, **dadurch gekennzeichnet, dass** der Winkel zwischen den Führungselementen (16, 17, 18) jeweils 120 Grad beträgt.

6. Positioniervorrichtung nach einem der vorangehenden Ansprüche, **dadurch gekennzeichnet, dass** die Antriebe Motoren (38, 39) sind, wobei jeder Motor über ein Getriebe (31, 32, 33, 35, 36) mit einem der Rotoren (13, 14, 15) verbunden ist.

7. Positioniervorrichtung nach einem der Ansprüche 1 bis 5, **dadurch gekennzeichnet, dass** die Antriebe Elektromotoren sind, die einen gemeinsamen Stator (40) aufweisen und dass an jedem der Rotoren (43, 44, 45) Mittel (48, 49, 50) vorhanden sind, die mit entsprechenden, am Stator (40) angeordneten Mitteln (46, 47, 51) elektromagnetisch zusammenwirken.

## Claims

1. Positioning device (11) in which a body (12) is displaceable and rotatable by means of three drives (38, 39; 46 - 51) in a plane (X - Y), **characterised in that** three elongated, non-parallel guide elements (16, 17, 18) are rigidly connected to the body (12), **in that** each guide element (16, 17, 18) is received in a translational bearing (19, 20, 21) in a longitudinally displaceable way, **in that** each translational bearing (19, 20, 21) is pivotable about a pivot axis (22, 23, 24) directed perpendicular to the plane, **in that** each pivot axis (22, 23, 24) is disposed on a rotor (13, 14, 15; 43, 44, 45) spaced apart from its rotational axis and parallel to this rotational axis, and **in that** the three rotors (13, 14, 15; 43, 44, 45) are disposed axis-parallel and are rotatable by means of the drives (30, 39; 46 - 51).

2. Positioning device according to claim 1, **characterised in that** the three rotors (13, 14, 15; 43, 44, 45) are disposed coaxially.

3. Positioning device according to one of the preceding claims, **characterised in that** the spacing of the rotor axis to the pivot axis (22, 23, 24) is the same for all three rotors (13, 14, 15; 43, 44, 45).

4. Positioning device according to one of the preceding claims, **characterised in that** the guide elements (16, 17, 18) are straight.

5. Positioning device according to claim 4, **characterised in that** the angle between the guide elements (16, 17, 18) is in each case 120 degrees.

6. Positioning device according to one of the preceding claims, **characterised in that** the drives are motors (38, 39), each motor being connected to one of the rotors (13, 14, 15) via a gearing (31, 32, 33, 35, 36).

7. Positioning device according to one of the claims 1 to 5, **characterised in that** the drives are electro-motors which have a common stator (40), and **in that** there are means (48, 49, 50) on each of the rotors (43, 44, 45) that cooperate electromagnetically with corresponding means (46, 47, 51) disposed on the stator (40).

## Revendications

1. Dispositif de positionnement (11), dans lequel un corps (12) est rotatif et coulissant au moyen de trois entraînements (38, 39; 46-51) dans un plan (X-Y), **caractérisé en ce que** trois éléments de guidage allongés non parallèles (16, 17, 18) sont reliés rigidement au corps (2), **en ce que** chaque élément de guidage (16, 17, 18) est logé de manière coulissante longitudinalement dans un palier de translation (19, 20, 21), **en ce que** chaque palier de translation (19, 20, 21) est pivotant autour d'un axe pivotant (22, 23, 24) dirigé perpendiculairement au plan, **en ce que** chaque axe pivotant (22, 23, 24) est disposé sur un rotor (13, 14, 15; 43, 44, 45) à distance de son axe de rotation et parallèle à cet axe de rotation et **en ce que** les trois rotors (13, 14, 15; 43, 44, 45) sont disposés axials parallèlement et sont rotatifs par les entraînements (38, 39; 46 - 51).

2. Dispositif de positionnement selon la revendication 1, **caractérisé en ce que** les trois rotors (13, 14, 15; 43, 44, 45) sont disposés de manière concentrique.

3. Dispositif de positionnement selon l'une des revendications précédentes, **caractérisé en ce que** la distance entre l'axe de rotor et l'axe pivotant (22, 23, 24) est identique pour les trois rotors (13, 14, 15; 43, 44, 45).

4. Dispositif de positionnement selon l'une des revendications précédentes, **caractérisé en ce que** les éléments de guidage (16, 17, 18) sont droits.

5. Dispositif de positionnement selon la revendication 4, **caractérisé en ce que** l'angle entre les éléments de guidage (16, 17, 18) est respectivement de 120 degrés.

6. Dispositif de positionnement selon l'une des revendications précédentes, **caractérisé en ce que** les entraînements sont des moteurs (38, 39), chaque moteur étant relié par un engrenage (31, 32, 33, 35, 36) à l'un des rotors (13, 14, 15).

7. Dispositif de positionnement selon l'une des revendications 1 à 5, **caractérisé en ce que** les entraînements sont des moteurs électriques qui présentent un stator commun (40) et **en ce que** il est prévu sur chacun des rotors (43, 44, 45) des moyens (48, 49, 50) qui coopèrent par électromagnétisme avec des moyens (46, 47, 51) correspondants disposés sur le stator (40).
